# FASCICULE DE BREVET EUROPEEN

(11) **EP 0 644 126 B1**
(45) Date de publication et mention de la délivrance du brevet: **10.07.1996**
(21) Numéro de dépôt: 94401916.5
(22) Date de dépôt: 30.08.1994
(51) Int. Cl.: B65D 43/06, B65D 17/28

(54) **Elément de fermeture pour emprisonner un produit dans un pot de manière inviolable et procédé de fabrication d'un tel élément de fermeture**
Originalitäts-sicherndes Verschlusselement für ein, ein Produkt enthaltendes Gefäss sowie Verfahren zur Herstellung dieses Verschlusselementes
Closure element for sealing a product in a tamper proof jar and method of manufacturing the closure element

(30) Priorité: 17.09.1993 FR 9311104
(43) Date de publication de la demande: 22.03.1995
(73) Titulaire: L'OREAL, F-75008 Paris (FR)
(72) Inventeur: Chanal, Cyrille, F-94220 Charenton-Le-Pont (FR); Playe, Jacques 25, rue Napoléon Bonaparte, F-91070 Bondoufle (FR)
(74) Mandataire: Peuscet, Jacques

(56) Documents cités:
- WO-A-91/08959
- WO-A-92/06011
- FR-A- 2 617 756
- GB-A- 1 571 391
- US-A- 4 030 630

## Description

L'invention est relative à un élément de fermeture pour un pot muni d'un col afin d'emprisonner de manière inviolable un produit, en particulier un produit cosmétique, dans ce pot, ledit élément de fermeture étant réalisé par bi-injection de matière plastique et comprenant une bague d'accrochage fixée sur le col du pot de manière pratiquement indémontable, cette bague d'accrochage étant réalisée en une première matière plastique, et un disque, formant couvercle, réalisé en une deuxième matière plastique et lié à la bague d'accrochage, ce disque étant muni d'un moyen de traction, l'ouverture du pot nécessitant de séparer le disque de la bague d'accrochage.

On connaît, par exemple d'après FR-A-2 617 756, un élément de fermeture de ce type obtenu par deux injections successives, les conditions étant choisies de manière qu'une liaison s'établisse par thermofusion dans la zone de juxtaposition de la bague et du disque, entre les deux matériaux constitutifs de ces parties.

Bien que cette solution présente des avantages, l'expérience a montré que la force d'adhésion entre bague et disque formant couvercle n'était pas véritablement maîtrisée, ce qui conduit à une dispersion importante des efforts à développer pour arracher le disque de la bague.

L'invention a pour but, surtout, de fournir un élément de fermeture qui réponde mieux que jusqu'à présent aux diverses exigences de la pratique et qui, notamment, tout en continuant à assurer une fermeture inviolable, permet de tenir, dans des limites acceptables, la force à développer pour séparer le disque de la bague, lors de la première ouverture. On souhaite, en outre, que cet élément de fermeture reste d'une fabrication simple et économique.

Selon l'invention, un élément de fermeture d'un pot muni d'un col, pour emprisonner de manière inviolable un produit, en particulier un produit cosmétique, dans ce pot, du genre défini précédemment, est caractérisé par le fait que la bague et le disque sont réalisés en deux matières différentes, choisies de manière à être incompatibles pour qu'il ne s'établisse pas de liaison par thermofusion entre elles, et que la bague est surmoulée sur le bord du disque formant une couronne, lequel bord se trouve enserré dans une gorge annulaire de ladite bague, et que la gorge de la bague a une épaisseur axiale et une profondeur radiale telles que la fermeture réalisée par l'élément en place sur le pot soit étanche, et que les dimensions de la gorge sont en outre prévues pour qu'après arrachement du disque et dégagement du bord, celui-ci ne peut être remis en place dans la gorge annulaire.

La liaison entre disque et bague est obtenue non plus par un énomène de thermofusion difficilement contrôlable, mais par une liaison de forme donnant lieu à des dispersions moindres au niveau de la force d'arrachement du disque relativement à la bague.

Avantageusement, les deux matières plastiques utilisées pour l'injection des deux pièces de l'élément de fermeture sont constituées par le couple polyéthylène/résine de polyacétate ou les couples polypropylène/polyéthylène et Santoprène® /polyéthylène. Chacune de ces matières peut servir indifféremment pour la bague ou le disque, l'autre matière servant pour le disque ou la bague. Santoprène® est la marque sous laquelle la société "Monsanto" commercialise un polymère thermoplastique mou constitué par greffage d'EPDM sur du polypropylène, l'EPDM étant un terpolymère élastomère éthylène/propylène/diènes.

De préférence, le disque comporte une partie centrale plane et, sur sa périphérie, une jupe propre à pénétrer dans le col du pot, le bord supérieur de cette jupe comportant une extension en forme de couronne, située dans un plan sensiblement parallèle à celui du disque, cette couronne étant emprisonnée, lors du surmoulage, dans la gorge de la bague.

Le disque est muni, sur sa face extérieure, d'une languette permettant d'exercer une traction pour ouvrir le pot. La bague comporte sur la bordure interne supérieure de la gorge une saillie radiale vers le centre, d'étendue angulaire limitée, la position de cette saillie correspondant à celle de la languette du disque en place.

L'invention est également relative à un procédé de fabrication de l'élément de fermeture, ce procédé étant caractérisé par le fait que l'on choisit pour la bague et le disque deux matières plastiques incompatibles entre elles, ainsi que des conditions de moulage adaptées, de manière à ne pas créer une liaison par thermofusion, que l'on injecte d'abord le disque et qu'on surmoule la bague sur le bord du disque qui se trouve engagé dans une gorge annulaire complémentaire de la bague.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La figure 1, de ces dessins, est une vue en coupe verticale axiale d'un élément de fermeture selon l'invention fixé sur un pot de produit.

La figure 2 est une vue en plan de l'élément de fermeture.

La figure 3 est un détail en coupe, à plus grande échelle, de la bague seule.

La figure 4 est un détail en coupe, à plus grande échelle, du disque.

La figure 5, enfin, est un détail en coupe à plus grande échelle de l'ensemble de la bague et du disque monté sur le pot.

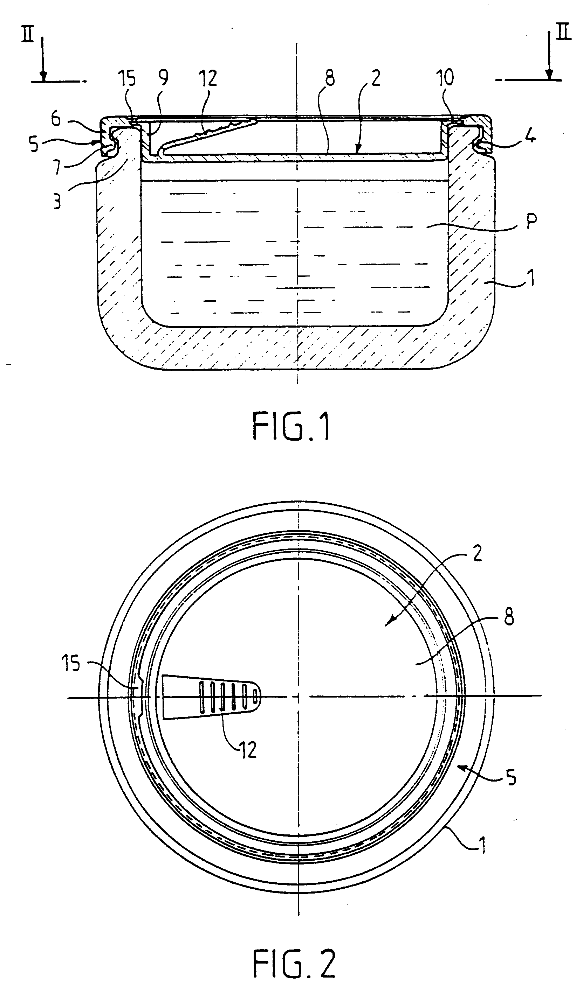

En se reportant aux dessins, notamment aux figures 1 et 2, on peut voir un pot 1 cylindrique, à section circulaire, par exemple en verre, contenant un produit cosmétique telle qu'une crème P, obturé par un élément de fermeture 2 propre à emprisonner le produit P de manière inviolable ou quasiment inviolable. L'adjectif "inviolable" utilisé ici doit être compris en ce sens que la première ouverture du pot 1 entraîne une modification de l'apparence de l'élément de fermeture de telle sorte qu'il est immédiatement visible, par la suite, que le pot 1 a déjà été ouvert.

Le pot 1 est muni d'un col 3 dont le diamètre interne, dans l'exemple considéré, est identique à celui du reste du pot 1. Le col 3 comporte une gorge périphérique annulaire 4 sur sa surface extérieure.

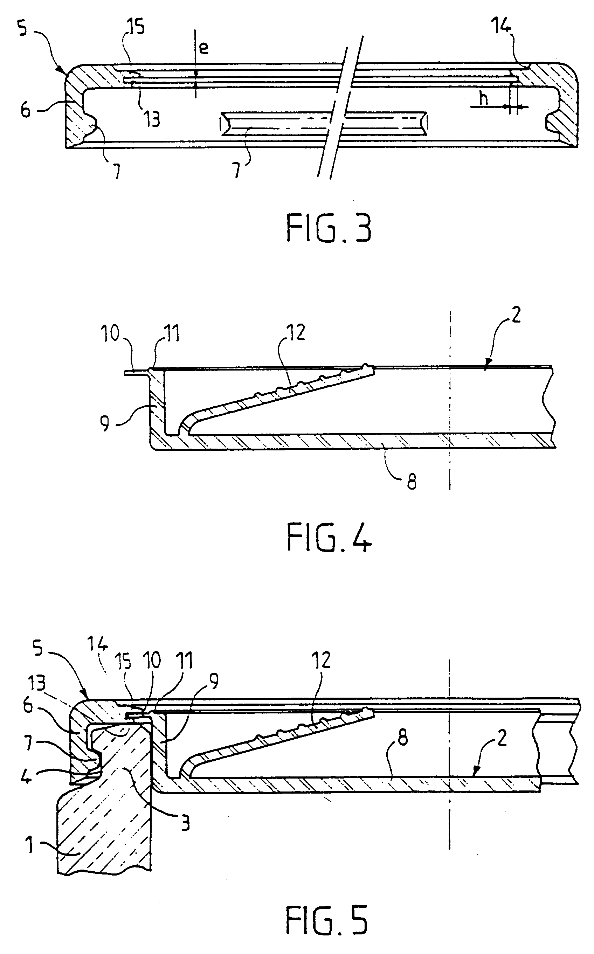

L'élément de fermeture 2 est réalisé par bi-injection de matière plastique. Cet élément 2 comprend une bague d'accrochage 5 à section transversale en forme de L renversé, présentant une jupe cylindrique 6 munie de bourrelets internes 7 propres à venir s'accrocher par encliquetage dans la gorge 4. Cet encliquetage est conçu de manière à être quasiment indémontable une fois qu'il a été réalisé. Les bourrelets 7 ne sont pas continus, comme visible sur la figure 3, mais s'étendent suivant des arcs de cercle régulièrement répartis, séparés les uns des autres par des zones dépourvues de bourrelets.

L'élément 2 comporte, en outre, un disque 8, formant couvercle, dont le plan moyen est orthogonal à l'axe du pot 1. Ce disque 8 est injecté en une matière plastique différente de celle de la bague 5.

Le disque 8, communément appelé "topette" est muni, sur son bord, d'une jupe 9, cylindrique ou tronconique, tournée vers le haut, comme bien visible sur la figure 5. Le bord supérieur de la jupe 9 comporte une extension 10, en forme de couronne dont le plan est parallèle à celui du disque proprement dit, cette couronne 10 faisant saillie radialement vers l'extérieur. Un bourrelet périphérique 11 est prévu sur la surface supérieure de la couronne 10, sensiblement au droit de la surface extérieure de la jupe 9. Ce bourrelet facilite l'empilement d'une multitude d'éléments 2 facilitant le montage industriel.

Une languette de préhension 12, solidaire du disque 8 et venue de moulage avec lui, est prévue sur la surface supérieure de ce disque au voisinage de la jupe 9.

Les deux matières plastiques du disque 8 et de la bague 5 sont choisies de manière à être incompatibles pour qu'il ne s'établisse pas de liaison entre elles par thermofusion.

Le disque 8 est réalisé en premier par injection, puis la bague 5 est surmoulée sur le bord formé par la couronne 10, qui se trouve enserrée dans une gorge annulaire 13 de la bague.

Le moule d'injection de la bague 5 est conçu de telle sorte que la gorge 13 ait une épaisseur e axiale (figure 3) et une profondeur radiale h (figure 3) telles que la fermeture réalisée par l'élément 2 en place sur le pot 1, soit étanche, bien qu'il n'y ait pas de liaison par thermofusion entre le disque 8 et la bague 5. En outre, l'ensemble est prévu pour que la force minimale à exercer pour séparer le disque 8 de la bague 5 soit de l'ordre de 1 daN.

Comme exemple de couple de matériaux utilisables pour la bague 5 et le disque 8, on peut donner le couple polyéthylène/résine de polyacétate, polypropylène/polyéthylène ou bien Santoprène®/polyéthylène. L'une de ces matières est utilisée pour le disque 8 et l'autre matière est utilisée pour la bague 5.

Le surmoulage de la bague 5 sur le disque 8 et les dimensions de la rainure 13 sont en outre prévus pour qu'après arrachement du disque 8 et dégagement de la couronne 10, celle-ci ne peut être remise en place dans la gorge annulaire 13.

Toutefois, le disque 8 formant couvercle peut être posé sur la bague 5 qui est restée accrochée au goulot 3, pour assurer une certaine protection du produit P. Avantageusement, la bague 5 comporte, sur sa surface supérieure, un évidement annulaire 14, ouvert vers le haut, propre à recevoir la couronne 10 posée sur le fond de cet évidement.

La bague 5 comporte sur son bord interne situé au-dessus de la rainure 13, une partie 15 en saillie radiale vers l'intérieur, de dimension périphérique relativement réduite, limitée par un bord rectiligne. La surface supérieure de la saillie 15 est inclinée en direction du centre de la bague 5. Cette saillie 15 se trouve au droit de la languette 12 lorsque l'élément de fermeture 2 n'a pas encore été ouvert. La saillie 15 assure la tenue de la bague 5 sur le col 3 du pot lors de l'arrachage du disque 8 ; elle facilite, en outre, le repositionnement de la topette 2 après l'utilisation.

L'invention fournit donc un élément de fermeture qui permet de protéger efficacement de l'air, pendant le stockage, le produit P contenu dans le pot, tout en assurant à l'utilisateur que ce produit n'a jamais été utilisé auparavant, grâce au caractère inviolable de cet élément de fermeture 2.

L'effort à exercer pour arracher le disque 8, à la première ouverture, est relativement bien maîtrisé grâce à la liaison de forme établie entre la couronne 10 du disque 8 et la gorge 13 de la bague 5. L'étanchéité au stockage est bien assurée.

## Revendications

1. Elément de fermeture (2) pour un pot (1) muni d'un col (3) afin d'emprisonner de manière inviolable un produit, en particulier un produit cosmétique, dans ce pot, ledit élément de fermeture (2) étant réalisé par bi-injection de matière plastique et comprenant une bague d'accrochage (5) fixée sur le col (3) du pot de manière pratiquement indémontable, cette bague d'accrochage (5) étant réalisée en une première matière plastique, et un disque (8), formant couvercle, réalisé en une deuxième matière plastique et lié à la bague d'accrochage (5), ce disque (8) étant muni d'un moyen de traction (12), l'ouverture du pot (1) nécessitant de séparer le disque (8) de la bague d'accrochage (5), caractérisé par le fait que la bague (5) et le disque (8) sont réalisés en deux matières différentes, choisies de manière à être incompatibles pour qu'il ne s'établisse pas de liaison par thermofusion entre elles ; que la bague (5) est surmoulée sur le bord (10) du disque formant une couronne, lequel bord (10) se trouve enserré dans une gorge annulaire (13) de ladite bague (5) ; que la gorge (13) de la bague (5) a une épaisseur axiale (e) et une profondeur radiale (h) telles que la fermeture réalisée par l'élément (2) en place sur le pot (1) soit étanche ; et que les dimensions de la gorge (13) sont en outre prévues pour qu'après arrachement du disque (8) et dégagement du bord (10), celui-ci ne peut être remis en place dans la gorge annulaire (13).

2. Elément de fermeture selon la revendication 1, caractérisé par le fait que les deux matières plastiques utilisées pour injection des deux pièces (5, 8) de l'élément de fermeture sont constituées par l'un des couples polyéthylène/résine de polyacétate, polypropylène/polyéthylène et (EPDM greffé sur du polypropylène)/polyéthylène, chacune de ces matières pouvant servir indifféremment pour la bague (5) ou le disque(8), l'autre matière servant pour le disque (8) ou la bague (5), la dénomination EPDM désignant un terpolymère éthylène/propylène/diènes.

3. Elément de fermeture selon la revendication 1 ou 2, caractérisé par le fait que le disque (8) comporte une partie centrale plane et, sur sa périphérie, une jupe (9) propre à pénétrer dans le col du pot, le bord supérieur de cette jupe comportant une extension en forme de couronne (10), située dans un plan sensiblement parallèle à celui du disque, cette couronne (10) étant emprisonnée, lors du surmoulage, dans la gorge (13) de la bague (5).

4. Elément de fermeture selon la revendication 3, caractérisé par le fait qu'un bourrelet périphérique (11) est prévu sur la surface supérieure de la couronne (10) sensiblement au droit de la surface extérieure de la jupe (9).

5. Elément de fermeture selon la revendication 3 ou 4, caractérisé par le fait que la bague (5) comporte, sur sa surface supérieure, un évidement annulaire (14), ouvert vers le haut, propre à recevoir la couronne (10) posée sur le fond de cet évidement.

6. Elément de fermeture selon l'une des revendications précédentes, caractérisé par le fait que l'ensemble est prévu pour que la force minimale à exercer pour séparer le disque (8) de la bague (5) soit de l'ordre de 1 daN.

7. Elément de fermeture selon l'une des revendications précédentes, caractérisé par le fait que le disque (8) est muni, sur sa face extérieure, d'une languette (12) permettant d'exercer une traction pour ouvrir le pot.

8. Elément de fermeture selon l'une des revendications précédentes, caractérisé par le fait que la bague (5) comporte sur la bordure interne supérieure de la gorge (13) une saillie radiale (15) vers le centre, d'étendue angulaire limitée, la position de cette saillie (15) correspondant à celle de la languette (12) du disque.

9. Procédé de fabrication d'un élément de fermeture selon l'une des revendications précédentes, caractérisé par le fait que l'on choisit pour la bague (5) et le disque (8) deux matières plastiques incompatibles entre elles, ainsi que des conditions de moulage adaptées, de manière à ne pas créer une liaison par thermofusion, que l'on injecte d'abord le disque (8) et qu'on surmoule la bague (5) sur le bord du disque qui se trouve engagé dans une gorge annulaire (13) complémentaire de la bague.

## Claims

1. Closure element (2) for a pot (1) equipped with a neck (3) in order to confine a product, particularly a cosmetic product, in this pot in a tamperproof manner, the said closure element (2) being produced by dual-injection of plastic and comprising a fastening ring (5) fixed onto the neck (3) of the pot in a practically non-removable manner, this fastening ring (5) being produced from a first plastic, and a disc (8), forming a lid, produced from a second plastic and connected to the fastening ring (5), this disc (8) being equipped with a pull means (12), it being necessary to separate the disc (8) from the fastening ring (5) in order to open the pot (1), characterized in that the ring (5) and the disc (8) are produced from two different materials which are chosen to be incompatible so that no connection becomes established between them by thermofusion, and that the ring (5) is overmoulded over the edge (10) of the disc, forming a collar, which edge (10) is trapped in an annular groove (13) in the said ring (5), that the groove (13) in the ring (5) has an axial thickness (e) and a radial depth (h) which are such that the closure produced by the element (2) fitted on the pot (1) is leaktight; and that the dimensions of the groove (13) are further designed so that after the disc (8) has been torn out and the edge (10) has been disengaged, this edge cannot be fitted back into the annular groove (13).

2. Closure element according to Claim 1, characterized in that the two plastics used for injecting the two components (5, 8) of the closure element are made up by one of the polyethylene/polyacetate resin, polypropylene/polyethylene and (EPDM grafted onto polypropylene)/polyethylene pairings, it being possible for each of these materials to be used equally well for the ring (5) or for the disc (8), the other material being used for the disc (8) or the ring (5), the denomination EPDM denoting an ethylene propylene diene terpolymer.

3. Closure element according to Claim 1 or 2, characterized in that the disc (8) includes a flat central part and, on its periphery, a skirt (9) capable of penetrating into the neck of the pot, the upper edge of this skirt including a collar-shaped extension (10) situated in a plane substantially parallel to that of the disc, this collar (10) being trapped in the groove (13) of the ring (5) during overmoulding.

4. Closure element according to Claim 3, characterized in that a peripheral bead (11) is provided on the upper surface of the collar (10), substantially level with the outer surface of the skirt (9).

5. Closure element according to Claim 3 or 4, characterized in that the ring (5) includes on its upper surface an annular recess (14) which is open upwards and capable of receiving the collar (10) placed on the bottom of this recess.

6. Closure element according to one of the preceding claims, characterized in that the assembly is designed for the minimum force to be exerted to separate the disc (8) from the ring (5) to be of the order of 1 daN.

7. Closure element according to one of the preceding claims, characterized in that the disc (8) is equipped on its outer face with a tab (12) allowing a pulling force to be exerted in order to open the pot.

8. Closure element according to one of the preceding claims, characterized in that the ring (5) includes on the upper internal border of the groove (13) a radial projection (15) towards the centre, of limited angular extent, the position of this projection (15) corresponding to that of the tab (12) of the disc.

9. Method for manufacturing a closure element according to one of the preceding claims, characterized in that two plastics which are incompatible with each other as well as suitable moulding conditions are chosen for the ring (5) and the disc (8) so that no connection by thermofusion is created, in that first of all the disc (8) is injected, then the ring (5) is overmoulded over the edge of the disc which is engaged in a complementary annular groove (13) in the ring.

## Patentansprüche

1. Verschlußelement (2) für ein mit einem Hals (3) versehenes Gefäß (1) zum unversehrbaren Einschließen eines Produktes, insbesondere eines kosmetischen Produktes in dem Gefäß, wobei das Verschlußelement (2) durch Doppelspritzen aus Kunststoff hergestellt ist und einen praktisch nicht abnehmbar auf dem Hals (3) des Gefäßes befestigten Einhakring umfaßt, wobei der Einhakring (5) aus einem ersten Kunststoff und eine den Deckel bildende Scheibe (8) aus einem zweiten Kunststoff bestehen, welche mit dem Einhakring (5) verbunden ist, wobei die Scheibe (8) ein Zugmittel (12) aufweist und wobei die Scheibe (8) zum Öffnen des Gefäßes (1) von dem Einhakring (5) getrennt werden muß,
**dadurch gekennzeichnet,** daß
der Ring (5) und die Scheibe (8) aus zwei unterschiedlichen Materialien bestehen, die man so wählt, daß sie inkompatibel sind, damit sich zwischen ihnen keine Verbindung durch Wärmeschmelzen ausbildet; daß der Ring (5) auf den Rand (10) der Scheibe aufgeformt ist und einen Kranz bildet, so daß der Rand (10) in eine ringförmige Rille (13) des Rings (5) eingesetzt ist; daß die Rille (13) des Rings (5) eine solche axiale Dicke (e) und radiale Tiefe (h) besitzt, daß der durch das auf dem Gefäß (1) angebrachte Element (2) erzeugte Verschluß dicht ist; und daß die Abmessungen der Rille (13) außerdem so gewählt sind, daß nach dem Abziehen der Scheibe (8) und der Freigabe des Randes (10) dieser nicht wieder in die ringförmige Rille (13) eingesetzt werden kann.

2. Verschlußelement gemäß Anspruch 1, dadurch gekennzeichnet, daß die beiden zum Spritzen der beiden Teile (5, 8) des Verschlußelementes verwendeten Kunststoffe aus einem der Paare Polyethylen/Polyacetatharz, Polypropylen/Polyethylen und (EPDM aufgepfropft auf Polypropylen)/Polyethylen bestehen, wobei jedes dieser Materialien beliebig als Ring (5) oder als Scheibe (8) dienen kann, während das andere Material als Scheibe (8) oder als Ring (5) dient, wobei der Ausdruck EPDM ein Ethylen/Propylen/Dien-Terpolymerisat bezeichnet.

3. Verschlußelement gemäß Anspruch 1 oder 2, dadurch gekennzeichnet, daß die Scheibe (8) einen ebenen mittleren Bereich und auf ihrem Umfang eine Schürze (9) aufweist, die in den Hals des Gefäßes hineinragen kann, wobei der obere Rand der Schürze eine Verlängerung in Form eines Kranzes (10) besitzt, der sich in einer zur Scheibe im wesentlichen parallelen Ebene befindet, wobei der Kranz (10) durch das Aufformen von der Rille (13) des Rings (5) umschlossen ist.

4. Verschlußelement gemäß Anspruch 3, dadurch gekennzeichnet, daß ein Umfangswulst (11) auf der Oberseite des Kranzes (10) im wesentlichen gegenüber der Außenseite der Schürze (9) vorgesehen ist.

5. Verschlußelement gemäß Anspruch 3 oder 4, dadurch gekennzeichnet, daß der Ring (5) auf seiner Oberseite eine nach oben offene, ringförmige Ausnehmung (14) aufweist, die zur Aufnahme des auf den Boden der Ausnehmung (10) aufgesetzten Kranzes dient.

6. Verschlußelement gemäß einem der vorhergehenden Ansprüche, dadurch gekennzeichnet, daß die Anordnung so gewählt ist, daß die minimale aufzuwendende Kraft zum Trennen der Scheibe (8) von dem Ring (5) in der Größenordnung von 1 Dekanewton (daN) liegt.

7. Verschlußelement gemäß einem der vorhergehenden Ansprüche, dadurch gekennzeichnet, daß die Scheibe (8) auf ihrer Außenseite mit einer Zunge (12) versehen ist, die es ermöglicht, einen Zug zum Öffnen des Gefäßes auszuüben.

8. Verschlußelement gemäß einem der vorhergehenden Ansprüche, dadurch gekennzeichnet, daß der Ring (5) auf dem inneren, oberen Rand der Rille (13) einen zur Mitte gerichteten, radialen Vorsprung (15) mit beschränkter Winkelausdehnung aufweist, wobei die Lage des Vorsprungs (15) der der Zunge (12) der Scheibe entspricht.

9. Verfahren zur Herstellung eines Verschlußelementes nach einem der vorhergehenden Ansprüche, dadurch gekennzeichnet, daß man für den Ring (5) und die Scheibe (8) zwei inkompatible Kunststoffe, sowie derart angepaßte Formungsbedingungen wählt, daß keine Verbindung durch Wärmeschmelzen erzeugt wird, daß man zunächst die Scheibe (8) spritzt und daß man den Ring (5) auf den Rand der Scheibe aufformt, die sich dann in einer komplementären, ringförmingen Rille (13) des Rings befindet.
